# FASCICULE DE BREVET EUROPEEN

(11) **EP 1 136 237 B1**
(45) Date de publication et mention de la délivrance du brevet: **15.09.2004**
(21) Numéro de dépôt: 01400704.1
(22) Date de dépôt: 16.03.2001
(51) Int. Cl.: B29C 70/34, B29C 70/86, B29C 43/18

(54) **Pièce en matière plastique renforcée et procédé de fabrication**
Faserverstärktes Kunststoffteil und Verfahren zur Herstellung
Fibre reinforced plastic article and method of manufacture

(30) Priorité: 20.03.2000 FR 0003531
(43) Date de publication de la demande: 26.09.2001
(73) Titulaire: COMPAGNIE PLASTIC OMNIUM, 69007 Lyon (FR)
(72) Inventeur: Blanchon, Charles-Guillaume, 01100 Oyonnax (FR)
(74) Mandataire: Tanty, François

(56) Documents cités:
- FR-A- 2 763 547
- US-A- 4 123 488
- US-A- 5 927 778

## Description

La présente invention concerne la fabrication de pièces en matière plastique renforcée, notamment des pièces structurelles de véhicule automobile.

Il est connu d'utiliser, notamment pour réaliser des poutres pour pare-chocs de véhicule automobile, des nappes de fibres imprégnées de matière thermoplastique.

De telles nappes sont par exemple connues sous les dénominations TRE ou TWINTEX.

Le TRE (Thermoplastique Renforcé Estampable) est constitué de polypropylène renforcé de fibres de verre.

Le TWINTEX (marque déposée de la société VETROTEX) est un tissu de fils constitués de fibres de verre noyées dans du polypropylène.

Le TEPEX (marque déposée de la société DU PONT DE NEMOURS) est une matière thermoplastique drapable à fibres continues, tout comme le TWINTEX.

Il est encore connu d'utiliser des nappes multicouche obtenues par superposition de feuilles de TRE et de feuilles de type TWINTEX ou TEPEX.

De telles nappes nécessitent d'être chauffées pour être mises en forme. On connaît par la demande internationale WO 98/52793 un procédé de fabrication de pièces structurelles dans lequel on commence par mettre en place une nappe comprenant des fibres de renfort imprégnées de matière thermoplastique dans un moule ouvert, puis on ferme le moule et l'on injecte de la matière thermoplastique sous pression dans le moule.

Il existe un besoin pour intégrer à la pièce structurelle des renforts locaux, afin par exemple d'améliorer la résistance mécanique de certaines zones.

Dans la demande internationale WO 98/52793 précitée, les renforts locaux sont emprisonnés entre deux nappes extérieures, ce qui complique la fabrication et oblige à utiliser plus d'une nappe.

La demande FR-A-2763547 décrit les préambules des revendications 1 et 10.

La présente invention vise à faciliter la fabrication d'une pièce structurelle à partir d'une ou plusieurs nappes comprenant des fibres imprégnées de matière thermoplastique, par exemple des nappes de TWINTEX ou tout autre matériau similaire.

L'invention y parvient grâce au fait que :
- l'on superpose au moins une nappe et un renfort local dans un moule avant la fermeture de celui-ci, l'un au moins de la nappe et du renfort local étant constitué de fibres de renfort et de matière thermoplastique, le moule comportant du côté du renfort local une empreinte plus large que celui-ci,
- puis on introduit de la matière thermoplastique qui vient au contact du renfort local dans l'empreinte de manière à créer dans cette dernière une pression permettant de compacter le renfort local et la région sous-jacente de la nappe, le moule étant conformé pour comprimer lors de sa fermeture la nappe de part et d'autre du renfort local.

Grâce à l'invention, la mise en place de renforts locaux est relativement facile à effectuer, car il n'est pas nécessaire de positionner très précisément le ou chaque renfort local dans le moule.

En effet, dans l'invention, l'empreinte précitée n'est pas destinée à appliquer directement la pression nécessaire au compactage des fibres du renfort local et/ou de la région sous-jacente de la nappe, cette pression étant obtenue par l'intermédiaire de matière plastique déposée avant la fermeture du moule au droit de l'empreinte ou injectée dans cette dernière après la fermeture du moule.

Si la pression nécessaire au compactage devait au contraire être obtenue directement par serrage du renfort local entre les deux parties du moule à sa fermeture, le renfort local devrait alors être positionné très précisément, ce qui engendrerait des difficultés.

Dans une mise en oeuvre particulière de l'invention, la nappe et/ou le renfort local, de préférence les deux, sont constitués par un tissu de fils constitués de fibres de verre et de matière thermoplastique du genre TWINTEX.

L'introduction de la matière thermoplastique dans l'empreinte associée au renfort local s'effectue de préférence par injection sous pression après fermeture du moule.

En variante, l'introduction de la matière thermoplastique dans l'empreinte s'effectue avant la fermeture du moule et c'est cette dernière qui produit au sein de l'empreinte la pression nécessaire au compactage du renfort local et de la nappe sous-jacente.

De préférence, la profondeur de l'empreinte est légèrement supérieure à l'épaisseur du renfort local.

Avantageusement, on fait déborder la nappe du moule et l'on découpe, après la fermeture du moule, les portions de la nappe qui débordent de celui-ci.

Ainsi, le positionnement de la nappe dans le moule peut s'effectuer sans trop de contraintes.

L'invention a encore pour objet une pièce en matière thermoplastique renforcée, comportant une nappe non plane d'un tissu de fils constitués de fibres de renfort et de matière thermoplastique, doublée localement par un renfort local sur lequel est surmoulée une masse de matière thermoplastique débordant légèrement de part et d'autre de ce renfort local sur la nappe.

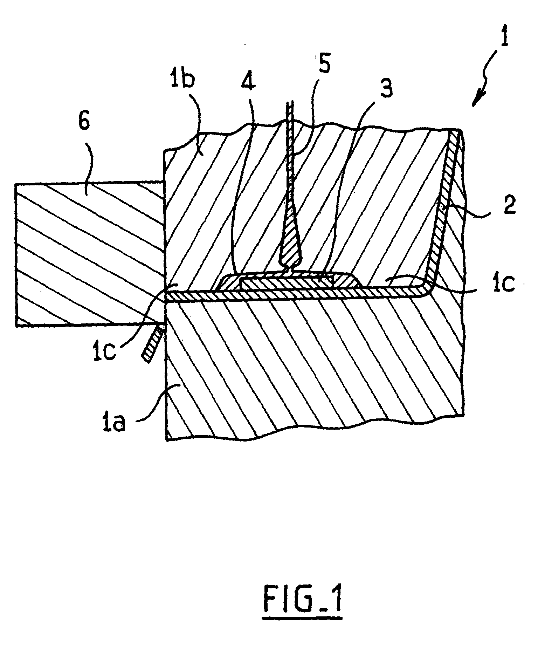

D'autres caractéristiques et avantages de la présente invention ressortiront à la lecture de la description détaillée qui va suivre, d'un exemple de mise en oeuvre non limitatif de l'invention, et à l'examen du dessin annexé sur lequel la figure 1 représente, de manière schématique, un moule fermé sur une nappe supportant un renfort local.

On a représenté sur la figure 1 un moule 1 comportant une partie inférieure 1a et une partie supérieure 1b, mobiles l'une par rapport à l'autre.

Dans l'exemple décrit, la partie inférieure 1a est fixe et la partie supérieure 1b est déplaçable verticalement.

Le moule 1 est à plan de joint positif, c'est à dire que la partie mobile 1b ne vient pas directement en appui sur la partie 1a lors du moulage, de sorte que l'on peut exercer une pression sur une nappe 2 disposée entre les deux parties de moule, la pression appliquée sur cette nappe 2 étant proportionnelle à la poussée exercée vers le bas par la partie supérieure 1b.

Dans l'exemple de réalisation décrit, la nappe 2 à conformer au moyen du moule 1 est unique et constituée d'un tissu de fils constitués de fibres de verre et de matière thermoplastique, du genre TWINTEX.

La nappe 2 sert de support à au moins un renfort local 3.

La partie supérieure 1b comporte au-dessus du renfort local 3 une empreinte 4, plus large que le renfort local 3.

La profondeur de l'empreinte 4 est supérieure à l'épaisseur du renfort local 3, ainsi qu'on peut le voir sur la figure 1.

L'empreinte 4 est réalisée en creux sur la face intérieure de la partie 1b du moule, entre des régions 1c destinées à comprimer la nappe de part et d'autre de l'empreinte.

Un canal 5 d'injection de matière thermoplastique est ménagé dans la partie supérieure 1b et débouche dans le fond de l'empreinte 4.

Ce canal 5 permet d'injecter de la matière thermoplastique sous pression, à l'état fluide, dans l'empreinte 4 après la fermeture du moule, pour compacter le renfort local 3 et la région sous-jacente de la nappe 2.

La matière thermoplastique introduite dans l'empreinte 4 vient au contact du renfort.

En dehors de l'empreinte 4, la nappe 2 est compactée par le serrage des deux parties 1a et 1b du moule 1.

La présence de l'empreinte 4, plus large que le renfort local 3, autorise une certaine tolérance sur le positionnement du renfort local 3 par rapport à la nappe 2, sans qu'il y ait à craindre que le renfort local 3 soit écrasé de manière non homogène entre les deux parties 1a et 1b du moule 1.

Le moule 1 comporte avantageusement un outil de découpe 6 qui est descendu après la fermeture du moule 1 pour sectionner des portions de la nappe 2 débordant du moule 1.

Pour réaliser une pièce structurelle non plane, à section ouverte, telle qu'une poutre pour pare-chocs, on dispose la nappe 2 sur la partie inférieure la avec le renfort local 3 déjà en place, puis on ferme le moule en descendant la partie supérieure 1b contre la nappe 2 et l'on injecte de la matière thermoplastique sous pression à l'état fluide par le canal d'injection 5 pour remplir l'empreinte 4 et compacter localement le renfort local 3 et la région sous-jacente de la nappe 2.

Une fois l'opération de compactage effectuée, on ouvre le moule 1 et après refroidissement de la pièce, on l'extrait de la partie inférieure 1a.

Bien entendu, l'invention n'est pas limitée à l'exemple de réalisation qui vient d'être décrit.

On peut notamment, au lieu d'injecter de la matière thermoplastique à l'état fluide sous pression par un canal d'injection, déposer par extrusion une quantité appropriée de matière thermoplastique au-dessus du renfort local et profiter de la pression engendrée par la fermeture du moule pour compacter le renfort local 3.

On peut encore disposer plusieurs renforts locaux 3, le moule étant agencé en conséquence.

## Revendications

1. Procédé de fabrication d'une pièce en matière plastique renforcée, notamment une pièce structurelle de véhicule automobile, le procédé comportant l'étape suivante :
- superposer dans un moule avant la fermeture de celui-ci au moins une nappe (2) et un renfort local (3), l'un au moins de la nappe (2) et du renfort local (3) étant constitué de fibres de renfort et de matière thermoplastique le procédé étant **caractérisé par le fait que** le moule comporte du côté du renfort local (3) une empreinte (4) plus large que celui-ci: et **par le fait qu'**il comporte en outre l'étape suivante:
- introduire de la matière thermoplastique qui vient au contact du renfort local dans l'empreinte (4) de manière à compacter le renfort local et la région sous-jacente de la nappe (2), le moule étant conformé pour comprimer lors de sa fermeture la nappe (2) de part et d'autre du renfort local (3).

2. Procédé selon la revendication précédente, **caractérisé par le fait que** le compactage du renfort local (3) et de la région sous-jacente de la nappe (2) s'effectue par injection de matière thermoplastique dans l'empreinte (4) après la fermeture du moule.

3. Procédé selon revendication 1, **caractérisé par le fait que** le compactage du renfort local et de la région sous-jacente de la nappe s'effectue par dépôt de matière thermoplastique au droit de l'empreinte (4) puis fermeture du moule.

4. Procédé selon l'une quelconque des revendications précédentes, **caractérisé par le fait que** la nappe et/ou le renfort local, de préférence les deux, sont constitués par un tissu de fils constitués de fibres de verre et de matière thermoplastique, du genre TWINTEX.

5. Procédé selon l'une quelconque des revendications précédentes, **caractérisé par le fait qu'**il est utilisé pour fabriquer une poutre pour pare-chocs de véhicule automobile.

6. Procédé selon l'une quelconque des revendications précédentes, **caractérisé par le fait que** la matière thermoplastique introduite dans l'empreinte vient au contact du renfort local (3).

7. Procédé selon l'une quelconque des revendications précédentes, **caractérisé par le fait que** la nappe (2) est unique.

8. Procédé selon l'une quelconque des revendications précédentes, **caractérisé par le fait que** l'empreinte (4) est réalisée en creux entre des régions (1c) du moule destinées à comprimer la nappe (2).

9. Procédé selon l'une quelconque des revendications précédentes, **caractérisé par le fait que** l'on fait déborder la nappe (2) du moule et l'on découpe, après la fermeture du moule, les portions de la nappe qui débordent de celui-ci.

10. Pièce en matière thermoplastique renforcée, comportant une nappe non plane d'un tissu de fils constitués de fibres de verre et de matière thermoplastique, doublée localement par un renfort local sur lequel est surmoulée une masse de matière thermoplastique **caractérisé par le fait que** la masse déborde légèrement de part et d'autre de ce renfort local sur la nappe.

## Claims

1. Process for manufacturing a reinforced plastic part, especially a structural part of a motor vehicle, the process comprising the following step:
- at least one sheet (2) and a local reinforcement (3) are superposed in a mould before the latter is closed, at least one of the sheet (2) and of the local reinforcement (3) consisting of reinforcing fibres and a thermoplastic, the process being **characterized in that** the mould has, on the side facing the local reinforcement (3), an impression (4) that is larger than the latter and **in that** it furthermore includes the following step:
- the thermoplastic, which comes into contact with the local reinforcement in the impression (4) is introduced so as to compact the local reinforcement and the subjacent region of the sheet (2), the mould, when it is closed, being shaped so as to compress the sheet (2) on either side of the local reinforcement (3).

2. Process according to the preceding claim, **characterized in that** the compacting of the local reinforcement (3) and of the subjacent region of the sheet (2) is carried out by the injection of a thermoplastic into the impression (4) after the mould has been closed.

3. Process according to Claim 1, **characterized in that** the compacting of the local reinforcement and of the subjacent region of the sheet is carried out by the deposition of a thermoplastic in line with the impression (4) followed by closure of the mould.

4. Process according to any one of the preceding claims, **characterized in that** the sheet and/or the local reinforcement, and preferably both, consist of a fabric of yarns consisting of glass fibres and thermoplastic fibres, of the TWINTEX kind.

5. Process according to any one of the preceding claims, **characterized in that** it is used to manufacture a beam for motor vehicle bumpers.

6. Process according to any one of the preceding claims, **characterized in that** the thermoplastic introduced into the impression comes into contact with the local reinforcement (3).

7. Process according to any one of the preceding claims, **characterized in that** the sheet (2) is a single sheet.

8. Process according to any one of the preceding claims, **characterized in that** the impression (4) is made as a recess between regions (1c) of the mould that are intended to compress the sheet (2).

9. Process according to any one of the preceding claims, **characterized in that** the sheet (2) is made to project beyond the mould and, after the mould has closed, the portions of the sheet projecting beyond the latter are cut off.

10. Part made of reinforced thermoplastic, comprising a non-flat sheet of a fabric of yarns consisting of glass fibres and thermoplastic fibres, locally lined by a local reinforcement onto which a thermoplastic substance is overmoulded, the part being **characterized in that** the substance extends slightly beyond and on either side of this local reinforcement onto the sheet.

## Patentansprüche

1. Verfahren zur Herstellung eines verstärkten Kunststoffteils, insbesondere eines Strukturteils eines Kraftfahrzeugs, das Verfahren weist den folgenden Schritt auf:
- vor dem Schließen der Form werden in diese mindestens eine Lage (2) und eine lokale Verstärkung (3) übereinander eingebracht, wobei zumindest ein Teil, die Lage (2) oder die lokale Verstärkung (3), aus Verstärkungsfasern und thermoplastischem Material gebildet ist, das Verfahren ist **dadurch gekennzeichnet, dass** die Form auf der Seite der lokalen Verstärkung (3) eine Vertiefung (4) aufweist, die größer ist als die lokale Verstärkung, und dadurch, dass das Verfahren zudem den folgenden Schritt aufweist:
- Einbringen des thermoplastischen Materials, das in Kontakt mit der lokalen Verstärkung in der Vertiefung (4) kommt, dergestalt, dass die lokale Verstärkung und der darunter liegende Bereich der Lage (2) kompaktiert wird, die Form ist dabei so ausgebildet, dass sie während ihres Schließvorgangs die Lage (2) beidseits der lokalen Verstärkung (3) komprimiert.

2. Verfahren nach dem vorangegangenen Anspruch, **dadurch gekennzeichnet, dass** das Kompaktieren der lokalen Verstärkung (3) und des darunter liegenden Bereich der Lage (2) durch Einspritzen von thermoplastischem Material in die Vertiefung (4) nach Schließen der Form erreicht wird.

3. Verfahren nach Anspruch 1, **dadurch gekennzeichnet, dass** das Kompaktieren der lokalen Verstärkung und des darunter liegenden Bereichs der Lage bewirkt wird durch ein Depot an thermoplastischem Material gegenüberliegend der Vertiefung (4) und danach Schließen der Form.

4. Verfahren nach einem beliebigen der vorangegangenen Ansprüche, **dadurch gekennzeichnet, dass** die Lage und/ oder die lokale Verstärkung, bevorzugt beide, gebildet sind von einem textilen Fadenmaterial aus Glasfasern und thermoplastischem Material der Art TWINTEX.

5. Verfahren nach einem beliebigen der vorangegangenen Ansprüche, **dadurch gekennzeichnet, dass** es verwendet wird für die Herstellung eines Trägers für Stossfänger eines Kraftfahrzeugs.

6. Verfahren nach einem beliebigen der vorangegangenen Ansprüche, **dadurch gekennzeichnet, dass** das thermoplastische Material, das in die Vertiefung eingegeben wird, mit der lokalen Verstärkung (3) in Kontakt kommt.

7. Verfahren nach einem beliebigen der vorangegangenen Ansprüche, **dadurch gekennzeichnet, dass** die Lage (2) zusammenhängend ist.

8. Verfahren nach einem beliebigen der vorangegangenen Ansprüche, **dadurch gekennzeichnet, dass** die Vertiefung (4) hergestellt ist als Aushöhlung zwischen Bereichen (1c) der Form, die zum Komprimieren der Lage (2) bestimmt sind.

9. Verfahren nach einem beliebigen der vorangegangenen Ansprüche, **dadurch gekennzeichnet, dass** man die Lage (2) aus der Form überstehen lässt und man nach Schließen der Form diejenigen Teilbereiche der Lage, die aus der Form herausstehen, abschneidet.

10. Kunststoffteil aus einem verstärkten Thermoplasten, das eine Lage eines nicht ebenen Gewebes mit Fäden aufweist, die aus Glasfasern und thermoplastischem Material gebildet sind, das lokal durch eine lokale Verstärkung überdeckt ist, auf welche eine Masse aus plastischem Material aufgegossen ist, das Kunststoffteil ist **dadurch gekennzeichnet, dass** die Masse geringfügig beidseitig die lokale Verstärkung auf der Lage überlappt.
